# EUROPÄISCHE PATENTANMELDUNG

(11) **EP 2 581 717 A1**
(43) Veröffentlichungstag der Anmeldung: **17.04.2013**
(21) Anmeldenummer: 11184590.5
(22) Anmeldetag: 11.10.2011
(51) Int. Cl.: G01F 15/06, G06M 1/27

(54) **Verfahren zur Bestimmung der angezeigten Ziffern von Zahlenrollen eines Rollenzählwerkes**

(71) Anmelder: GWF MessSysteme AG, 6002 Luzern (CH)
(72) Erfinder: Mathis, Peter, 6362 Stansstad (CH); Mettler, Roland, 6003 Luzern (CH)
(74) Vertreter: Blöchle, Hans

(57) **Zusammenfassung**

Bei diesem Verfahren werden in mehreren, sequenziell abarbeitbaren Schritten die angezeigten Ziffern von Zahlenrollen eines mechanischen Rollenzählwerkes bestimmt, wobei eine erste Variable (angleShift), oder mit Winkelverschiebung als gleichwertige Bezeichnung, eine zweite Variable genannt (rollerNumber), oder mit bestimmte Zahlenrolle als gleichwertige Bezeichnung, und eine dritte Variable genannt (Indication), oder mit korrigierter Drehwinkel als gleichwertige Bezeichnung verwendet werden. Die Ziffern bei Ziffernwechsel von 9 auf 0 und umgekehrt wie auch bei den übrigen Ziffernwechsel sind sicher bestimmbar. Dazu wird die Ziffer der bestimmten Zahlenrolle aus einer Tabelle gelesen, die eine Relation herstellt zwischen korrigierten Drehwinkeln und zugehörigen, angezeigten Ziffern der Zahlenrollen. Die korrigierten Drehwinkel werden bestimmt aus den erfassten Drehwinkeln und je nach Ziffernwechsel mit einer Winkelverschiebung korrigiert, wobei die Winkelverschiebungen aus einer weiteren Tabelle gelesen werden.

## Beschreibung

Die Erfindung betrifft ein Verfahren zur Bestimmung der angezeigten Ziffern von Zahlenrollen eines mechanischen, mehrstelligen Rollenzählwerkes zur Anzeige und visuellen Ablesung einer Gasmenge oder einer Wassermenge oder einer Elektrizitätsmenge.

Aus dem Stand der Technik sind Volumenmessgeräte für Gas oder Wasser zur Messung der vom Gaswerk gelieferten Gasmenge oder zur Messung der von der Wasserversorgung gelieferten Wassermenge sowie Elektrizitätszähler zur Messung der vom Elektrizitätswerk gelieferten Energie bekannt, wobei die gemessene Menge bzw. die gemessene Energie mittels eines mechanischen Rollenzählwerkes dargestellt wird und visuell ablesbar ist. Das Rollenzählwerk zeigt dabei die seit der letzten Nullstellung bzw. die seit der Inbetriebnahme durchgeflossene Menge an. Zur Bestimmung des Verbrauchs während einer bestimmten Periode wird der Stand des Rollenzählwerkes zu Beginn und am Ende dieser Periode abgelesen. Eine bevorzugte Ausführung des Rollenzählwerks besteht aus einer Achse, auf der die Zahlenrollen drehbar angeordnet sind und auf deren Umfang die Ziffern 0 bis 9 aufgebracht sind, sowie aus einer zweiten Achse mit darauf drehbar angeordneten Schaltritzeln, wobei die kleinerwertige Zahlenrolle im letzten Zehntel einer Umdrehung über das zugeordnete Schaltritzel die nächst höherwertige Rolle um eine Zehntelumdrehung weiterbewegt.

Im Weiteren sind Drehwinkelsensoren bekannt, mit denen in Rollenzählwerken oben genannter Bauart der Drehwinkel jeder Zahlenrolle berührungslos feststellbar ist. Aus der Patentschrift EP 0 660 263 B1 sind beispielsweise optische Drehwinkelsensoren bekannt geworden, die den Drehwinkel jeder Zahlenrolle mit einer Auflösung von 12° messen. Dazu sind fünf Drehwinkelsensoren beispielsweise radialsymmetrisch an jeder Zahlenrolle angeordnet. Je Zahlenrolle ist auch eine codierte Scheibe vorgesehen, die die Drehwinkelsensoren einschaltet und ausschaltet. Die Drehwinkelsensoren erzeugen ein fünfstelliges Codemuster, aus dem 30 Drehwinkelwerte verwendet werden und damit die oben genannte Auflösung von 12° erreicht wird.

Weiter ist aus der Patentschrift EP 0 660 264 B1 ein Verfahren bekannt geworden, mittels dem aus den oben genannten Drehwinkelwerten jeder Zahlenrolle die sichtbare bzw. die angezeigte Ziffer der Zahlenrolle zuverlässig ermittelt werden kann, selbst wenn der Drehwinkel jeder Zahlenrolle im 0° Bereich bzw. im 359° Bereich liegt, wobei bei einem Rollenzählwerk mit acht Zahlenrollen beispielsweise die vier höherwertigen Zahlenrollen nicht in diesen Bereichen liegen und die vier niederwertigen Zahlenrollen in diesen Bereichen liegen bzw. untereinander mittels der Schaltritzel im Eingriff sind. Die höherwertigen Zahlenrollen bilden ein stehendes Rollenpaket mit den Zahlenrollen ohne Eingriff untereinander, die niederwertigen Zahlenrollen bilden ein drehendes Rollenpaket mit den Zahlenrollen im Eingriff untereinander. Zur zuverlässigen Ermittlung der sichtbaren bzw. der angezeigten und momentan beispielsweise von 9 auf 0 im Übergang stehenden Ziffer jeder Zahlenrolle des drehenden Rollenpakets wird zuerst der Drehwinkel und daraus die Anzeige der niedrigstwertigen Zahlenrolle ermittelt, als nächstes wird die Anzeige der Zahlenrolle mit der zweitniedrigsten Wertigkeit aus dem Drehwinkel dieser Zahlenrolle und der Drehwinkeldifferenz zwischen dieser Zahlenrolle und der Zahlenrolle mit der niedrigsten Wertigkeit ermittelt, dieses Prozedere wird fortgesetzt und der Wert der nächst höherwertigen Zahlenrolle ermittelt aus dem Drehwinkel dieser Zahlenrolle und der Drehwinkeldifferenz zur nächst niedrigwertigeren Zahlenrolle und der Drehwinkeldifferenz aus dem vorangegangen Schritt, solange, bis die nächst niedrigwertigere Zahlenrolle, deren Anzeige ermittelt werden soll, nicht zwischen 9 und 0 steht oder bis die Anzeige der höchstwertigen Zahlenrolle ermittelt wurde. Danach wird die Anzeige der restlichen Zahlenrollen aus dem Drehwinkel ermittelt.

Das vorgeschlagene Verfahren löst die Aufgabe, die sichtbaren bzw. die angezeigten Ziffern der Zahlenrollen eines mechanischen Rollenzählwerkes aus den ermittelten Drehwinkeln der Zahlenrollen zu bestimmen.

Das vorgeschlagene Verfahren eignet sich zur elektronischen Bestimmung des Zählwerkstandes eines mechanischen Rollenzählwerkes mit einer hohen Auflösung (beispielsweise ein Wasserzähler mit einer Auflösung von 1 Liter) und mit entsprechend schnell drehenden Zahlenrollen. Im Weiteren kann mit dem vorgeschlagenen Verfahren der Stromverbrauch der elektronischen Schaltung zur Bestimmung des Zählwerkstandes minimiert werden, wobei beispielsweise ein batteriebetriebenes, als Auslesegerät verwendetes Funkmodul mit minimaler Batteriekapazität verwendet werden kann. Dank des kleinen Stromverbrauchs kann der Zählwerkstand häufiger ausgelesen werden. Im Übrigen ist eine zuverlässige elektronische Bestimmung der mechanisch angezeigten Ziffern möglich, selbst wenn während der sequentiellen Ermittlung der Drehwinkel ein Zählerfortschritt eingetreten ist.

Mit dem vorgeschlagenen Verfahren wird die Zahl der auszuführenden Schritte minimiert, wobei auf Tabellen zur Bestimmung der angezeigten Ziffern zugegriffen wird. Durch die minimierte Zahl der Schritte wird sowohl der Stromverbrauch des involvierten Rechners als auch die Zeit für die Durchführung des Verfahrens minimiert.

Die Messung der Drehwinkel für jede Zahlenrolle, wie im einleitend gewürdigten Stand der Technik angegebenen, wird vorzugsweise sequentiell in Richtung aufsteigende Wertigkeit der Zahlenrollen durchgeführt. Zuerst wird der Drehwinkel der Zahlenrolle mit der kleinsten Wertigkeit elektronisch ermittelt, beispielsweise die Zahlenrolle mit der 1 Liter Auflösung, dann die nächst höherwertige Zahlenrolle, beispielsweise die Zahlenrolle mit der 10 Liter Auflösung, und so weiter bis zur höchstwertigen Zahlenrolle. Bei schnell drehenden Zählwerken kann es vorkommen, dass die Zahlenrolle mit der kleinsten Wertigkeit während der für die Messungen der Drehwinkel benötigten Zeit einen Fortschritt aufweist und dadurch das Ergebnis der Drehwinkelmessungen zu verschiedenen angezeigten Zählwerkständen gehört und dadurch das Ergebnis aus der Bestimmung des angezeigten Zählwerkstandes falsch sein kann. Beispielsweise kann ein Rollenzählwerk mit acht Zahlenrollen während den Drehwinkelmessungen einen Zählerfortschritt von 99999999 auf 00000000 erfahren haben, und einige Drehwinkelmessungen können der Anzeige 99999999 zugeordnet sein und andere Messungen der Anzeige 00000000. Eine für den Fachmann offensichtliche Lösung dieses Problems besteht darin, nach der Drehwinkelmessung der höchstwertigen Zahlenrolle die Zahlenrolle mit der kleinsten Wertigkeit erneut zu messen und im Falle einer Abweichung zur vorhergehenden Messung das Ergebnis der Drehwinkelmessungen zu verwerfen und erneut die Drehwinkel aller Zahlenrollen zu messen. Diese Lösung hat den Nachteil, dass die in Zählwerken mit einer im Vergleich zu der für alle Drehwinkelmessungen benötigten Zeit rasch drehenden Zahlenrolle mit der kleinsten Wertigkeit oft mehrfach gemessen werden muss und möglicherweise auch nach mehrfachen Messungen noch kein zweifelsfrei richtiges Ergebnis erzielt wird. Zur Umgehung dieses Nachteils wird vorgeschlagen, nach der sequentiellen Drehwinkelmessung aller Zahlenrollen vorzugsweise die Zahlenrolle mit der zweitkleinsten Wertigkeit erneut zu messen und nur bei Änderung der Drehwinkels dieser Zahlenrolle werden alle Drehwinkelmessungen wiederholt. Da sich konstruktionsbedingt die Zahlenrolle mit der zweitkleinsten Wertigkeit zehnmal weniger oft dreht als die Zahlenrolle mit der kleinsten Wertigkeit ist die entsprechende Wiederholung der Drehwinkelmessungen zehn mal weniger oft erforderlich, was wiederum den Stromverbrauch entsprechend verkleinert.

Anhand der beiliegenden Figuren wird die vorliegende Erfindung näher erläutert.

Es zeigen:
Fig. 1
   eine Tabelle 1, die eine Relation herstellt zwischen angezeigten Ziffern von Zahlenrollen und Rotationswinkeln der Zahlenrollen und Drehwinkeln der Zahlenrollen,
Fig. 2
   ein Flussdiagramm zur Bestimmung der angezeigten Ziffern der Zahlenrollen eines mechanischen Rollenzählwerkes,
Fig. 3
   eine Tabelle 2, die eine Relation herstellt zwischen korrigierten Drehwinkeln und zugehörigen, angezeigten Ziffern der Zahlenrollen,
Fig. 4
   eine Tabelle 3, die eine Relation herstellt zwischen Drehwinkeln und Winkelverschiebungen,
Fig. 5
   die sichtbaren, bzw. die angezeigten Ziffern des Rollenzählwerkes und
Fig. 6
   das Rollenzählwerk in Verbindung mit einem Rechner.

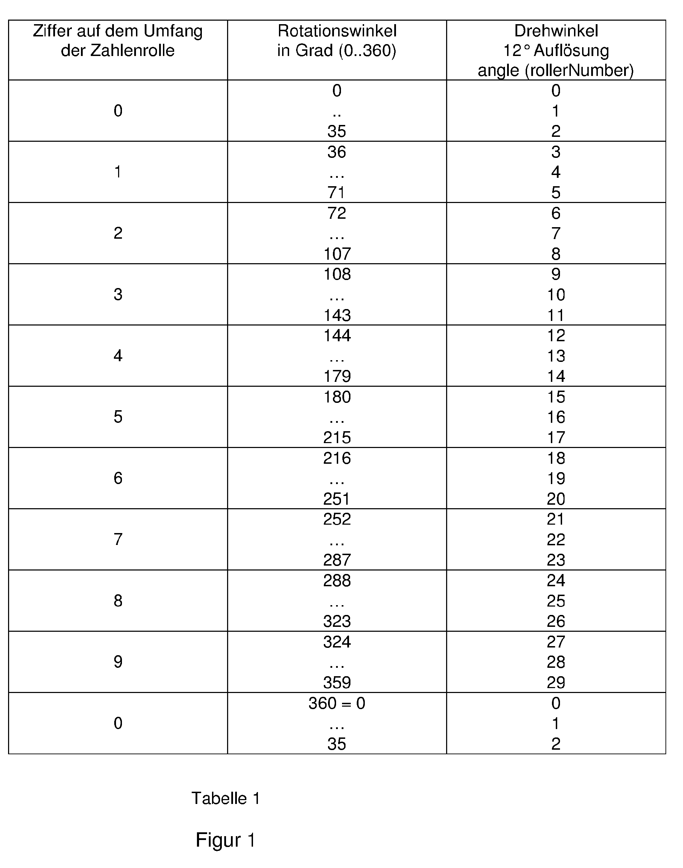

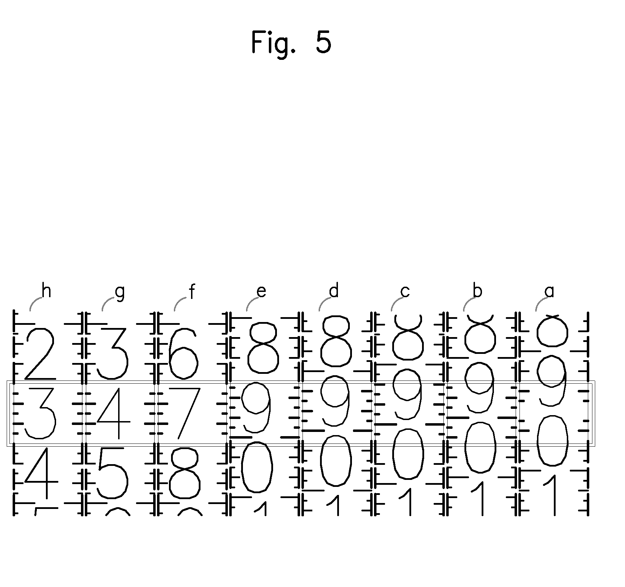

Fig. 1 zeigt eine Tabelle 1, die eine Relation herstellt zwischen angezeigten Ziffern von Zahlenrollen und Rotationswinkeln der Zahlenrollen und Drehwinkeln an den Zahlenrollen. Am Umfang jeder Zahlenrolle a-h (siehe Fig. 5) sind die in der linken Spalte dargestellten Ziffern 0 bis 9 vorgesehen, wobei jeder Ziffer ein Rotationswinkelbereich von 36° zugeordnet ist. Der englische Begriff Indication wird im Weiteren in den Figuren als gleichwertige Bezeichnung für die sichtbare bzw. die angezeigte Ziffer verwendet. In der mittleren Spalte der Tabelle 1 sind die der jeweiligen Ziffer zugeordnete Rotationswinkelbereiche dargestellt. In der rechten Spalte der Tabelle 1 sind die ermittelten Drehwinkel je Zahlenrolle und 360° Rotation der Zahlenrolle dargestellt. Die Auflösung der Drehwinkel beträgt 12° bzw. je 360° Rotation jeder Zahlenrolle sind 30 Messpunkte festgelegt. Mit den Drehwinken wird festgestellt, ob die Zahlenrolle einen Rotationswinkel von 0°, 12°, 24°, 36° etc. im Messzeitpunkt ausgeführt hat. Eine Auflösung von 9° bzw. je 360° Rotation jeder Zahlenrolle von 40 Messpunkten sind auch möglich, der Messaufwand ist aber entsprechend grösser und bringt in der praktischen Anwendung keinen zusätzlichen Nutzen. Der englische Begriff angle wird im Weiteren in den Figuren als gleichwertige Bezeichnung für Drehwinkel verwendet.

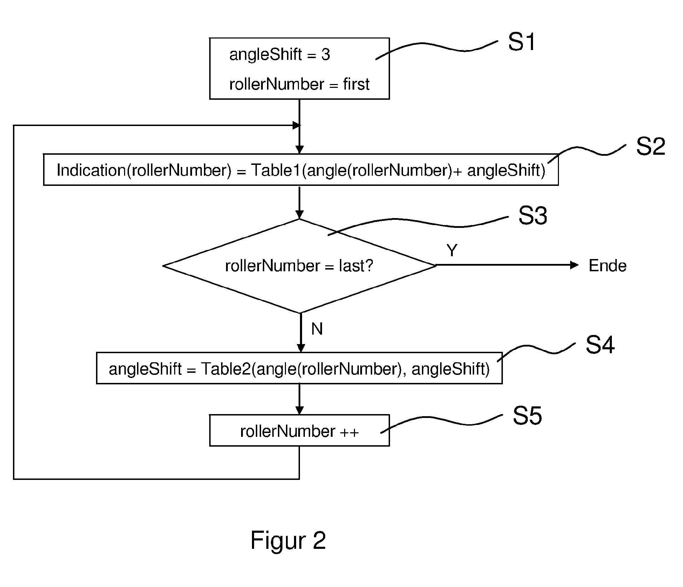

Fig. 2 zeigt ein Flussdiagramm mit mehreren, sequenziell abarbeitbaren Schritten zur Bestimmung der angezeigten Ziffern der Zahlenrollen eines mechanischen Rollenzählwerkes. In einem ersten Schritt S1 wird eine erste Variable genannt angleShift auf 3 und eine zweite Variable genannt rollerNumber auf first gesetzt. Mit first ist die niederwertigste Zahlenrolle gemeint. Im Beispiel der Fig. 5 ist es die Zahlenrolle a. Der englische Begriff angleShift wird im Weiteren in den Figuren als gleichwertige Bezeichnung für die Winkelverschiebung verwendet und der englische Begriff rollerNumber wird im Weiteren in den Figuren als gleichwertige Bezeichnung für die Unterscheidung der Zahlenrollen verwendet. (Siehe Fig. 5 mit den Zahlenrollenbezeichnungen a-h). Auf die Winkelverschiebung wird weiter unten eingegangen.

In einem zweiten Schritt S2 wird die sichtbare bzw. die angezeigte Ziffer der niederwertigsten Zahlenrolle bestimmt. Der Drehwinkel wird bestimmt, indem die Winkelverschiebung angleShift zum ermittelten Drehwinkel der niederwertigsten Zahlenrolle addiert wird.

Tabelle 2 stellt die Relation her zwischen korrigiertem Drehwinkel und der zugehörigen, angezeigten Ziffer der Zahlenrolle. Im obigen Beispiel ist der ermittelte Drehwinkel beispielsweise 0 und die Winkelverschiebung 3. Daraus ergibt sich ein korrigierter Drehwinkel von 3 und gemäss Tabelle 2 ist die zugehörige, angezeigte Ziffer 0 der niederwertigsten Zahlenrolle. Auf die Tabelle 2 wird weiter unten näher eingegangen.

In einem dritten Schritt S3 wird geprüft, ob die zweite Variable genannt rollerNumber den Wert last erreicht hat. Mit last ist die höchstwertige Zahlenrolle gemeint. Im Beispiel der Fig. 5 ist es die Zahlenrolle h. Falls die Prüfung das Ergebnis Y ergibt, ist das Verfahren zur Bestimmung der angezeigten Ziffern der Zahlenrollen zu Ende. Falls die Prüfung das Ergebnis N ergibt, wird das Verfahren in einem Schritt S4 fortgesetzt.

Im Schritt S4 wird die Winkelverschiebung neu bestimmt. Dazu wird in der Tabelle 3 ein Schnittpunkt gebildet zwischen der Zeile mit dem ermittelten Drehwinkel der bisherigen Zahlenrolle und der Spalte mit der bisherigen Winkelverschiebung. In der Zelle des Schnittpunktes steht die neue Winkelverschiebung zur Bestimmung der angezeigten Ziffer der nächst höherwertigen Zahlenrolle. Mit einem Drehwinkel von beispielsweise 0 und einer Winkelverschiebung von 3 aus Schritt S1 ergibt sich eine neue Winkelverschiebung von 4.

In einem fünften Schritt S5 wird die Variable rollerNumber bzw. die Zahlenrollenbezeichnung auf die nächst höherwertige Zahlenrolle gesetzt. Nach den Zahlenrollenbezeichnungen der Fig. 5 wird a ersetzt durch b.

Nach dem Schritt S5 wird erneut Schritt S2 ausgeführt zur Bestimmung der angezeigten Ziffer der nächst höherwertigen Zahlenrolle. Dazu wird in der Tabelle 3 ein Schnittpunkt gebildet zwischen der Zeile mit dem ermittelten Drehwinkel der nächst höherwertigen Zahlenrolle und der Spalte mit der in Schritt 4 bestimmten Winkelverschiebung. In der Zelle des Schnittpunktes steht die aktuelle Winkelverschiebung zur Bestimmung der angezeigten Ziffer. Mit einem Drehwinkel von beispielsweise 10 und einer Winkelverschiebung von 4 aus Schritt S4 ergibt sich eine aktuelle Winkelverschiebung von 3.

Die Iteration mit den Schritten S2, S3, S4, S5, S2, S3 ... usw. wird solange wiederholt bis die Prüfung im Schritt S3 das Ergebnis Y ergibt und somit die angezeigte Ziffer jeder Zahlenrolle bestimmt ist.

Fig. 5 zeigt die sichtbaren, bzw. die angezeigten Ziffern des Rollenzählwerkes und dient zur Herleitung der Tabelle 2 und der Tabelle 3 mit Hilfe einer mechanischen Betrachtung des Rollenzählwerkes beim Ziffernwechsel von 9 auf 0 und umgekehrt. Das zweckmässige Vorgehen soll an einem Beispiel an Hand der Fig. 5 zusammen mit dem Ablauf nach Fig. 2 erläutert werden.

Beim Ziffernwechsel von 9 auf 0 ergeben sich folgende Zusammenhänge:
Im ersten Schritt wird die Ziffer der niederwertigsten Zahlenrolle bestimmt, die in Fig. 5 mit a bezeichnet ist. Der Drehwinkel für eine bestimmte Zahlenrolle, als Variable angle(rollerNumber) bezeichnet, aus der Winkelmessung an dieser Zahlenrolle nimmt gemäss Tabelle 1 entweder den Wert 0 oder 29 an. Für den Fall, dass der Drehwinkel 0 ist und die Winkelverschiebung, als Variable angleShift bezeichnet, 3 ist, folgt aus Tabelle 2 die zugehörige Ziffer 0. (Als Variable Indication bezeichnet).

Wegen des mechanischen Spiels zwischen der niederstwertigen Zahlenrolle und der nächst höherwertigen Zahlenrolle muss die nächst höherwertige Zahlenrolle für die rechnerisch korrekte Bestimmung in Richtung Ziffer 0 verschoben werden. Der Wert für die Winkelverschiebung der nächst höherwertigen Zahlenrolle wird aus Tabelle 3, Zeile 0, Spalte 3 entnommen. Für eine Verschiebung in Richtung Ziffer 0 muss demzufolge in der Tabelle 3 in dieser Zelle 4 stehen, also eine Winkelverschiebung bzw. angleShift = 4 gesetzt werden.

Nun wird die Ziffer der nächst höherwertigen Zahlenrolle bestimmt, die in Fig. 5 mit b bezeichnet ist. Der Drehwinkel dieser Zahlenrolle ergibt 29 gemäss Tabelle 1 und (bei einer Winkelverschiebung von 4) einen korrigierten Drehwinkel von 33, (der korrigierte Drehwinkel ist auch als Variable angle(rollerNumber) + angleShift bezeichnet), und aus Tabelle 2 folgt eine Ziffer 0. Der Wert für die Winkelverschiebung der nächst höherwertigen Zahlenrolle wird aus Tabelle 3, Zeile 29, Spalte 4 entnommen. Aus Fig. 5 ist ersichtlich, dass die nächst höherwertige Zahlenrolle c noch weiter in Richtung Ziffer 0 verschoben werden soll, demzufolge muss in der Tabelle 3 in dieser Zelle 5 stehen.

Nun wird die Ziffer der nächst höherwertigen Zahlenrolle bestimmt, die in Fig. 5 mit c bezeichnet ist. Der Drehwinkel dieser Zahlenrolle ergibt 29 gemäss Tabelle 1, und (bei einer Winkelverschiebung von 5) einen korrigierten Drehwinkel von 34, und aus Tabelle 2 folgt eine Ziffer 0. Der Wert für den Drehwinkel für die nächst höherwertige Zahlenrolle wird wiederum aus Tabelle 3, Zeile 29, Spalte 4 entnommen, die Winkelverschiebung hat folglich den Wert 5.

Nun wird die Ziffer der nächst höherwertigen Zahlenrolle bestimmt, die in Figur 5 mit d bezeichnet ist. Der Drehwinkel dieser Zahlenrolle ergibt 28 gemäss Tabelle 1, und (bei einer Winkelverschiebung von 5) einen korrigierten Drehwinkel von 33, und aus Tabelle 2 folgt eine Ziffer 0. Der Wert der Winkelverschiebung für die nächst höherwertige Zahlenrolle wird aus Tabelle 3, Zeile 28, Spalte 5 entnommen. Aus Fig. 5 ist ersichtlich, dass die nächst höherwertige Zahlenrolle e noch weiter in Richtung Ziffer 0 verschoben werden muss, demzufolge muss in der Tabelle 3 in dieser Zelle 6 stehen.

Nun wird die Ziffer der nächst höherwertigen Zahlenrolle bestimmt, die in Fig. 5 mit e bezeichnet ist. Der Drehwinkel ergibt 29 gemäss Tabelle 1, und (bei einer Winkelverschiebung von 6) einen korrigierten Drehwinkel von 35, und aus Tabelle 2 folgt eine Ziffer 0. Der Wert der Winkelverschiebung für die nächst höherwertige Zahlenrolle wird aus Tabelle 3, Zeile 28, Spalte 6 entnommen. Aus Fig. 5 ist ersichtlich, dass die nächst höherwertige Zahlenrolle f in Richtung Ziffer 8 verschoben werden muss, demzufolge muss in der Tabelle 3 in dieser Zelle 6 stehen.

Nun wird die Ziffer der nächst höherwertigen Zahlenrolle bestimmt, die in Fig. 5 mit f bezeichnet ist. Der Drehwinkel ergibt 22 gemäss Tabelle 1, und (bei einer Winkelverschiebung von 6) einen korrigierten Drehwinkel von 28, und aus Tabelle 2 folgt eine Ziffer 8. Der Wert der Winkelverschiebung für die nächst höherwertige Zahlenrolle wird aus Tabelle 3, Zeile 22, Spalte 4 entnommen. Aus Fig. 5 ist ersichtlich, dass die nächst höherwertige Zahlenrolle g nicht verschoben werden muss, demzufolge muss in der Tabelle 3 in dieser Zelle 3 stehen.

Die Bestimmung der Ziffern der zweithöchstwertigen Zahlenrolle g und der höchstwertigen Zahlenrolle h und die Bestimmung der Zelleninhalte der Tabelle 3 werden sinngemäss wie oben dargelegt vorgenommen.

Beim Ziffernwechsel von 0 auf 9 ergeben sich folgende Zusammenhänge:
Für den Fall, dass der Drehwinkel der niederwertigsten Zahlenrolle 29 ergibt, folgt aus Tabelle 2 (bei einer Winkelverschiebung 3) eine Ziffer 9. Wegen des mechanischen Spiels zwischen der niederwertigsten Zahlenrolle a und der nächst höherwertigen Zahlenrolle b muss die nächst höherwertige Zahlenrolle b für die korrekte Bestimmung der Ziffer in Richtung Ziffer 9 verschoben werden. Der Wert für die Winkelverschiebung der nächst höherwertigen Zahlenrolle wird der Tabelle 3, Zeile 29, Spalte 3 entnommen Für eine Verschiebung in Richtung Ziffer 9 muss demzufolge in der Tabelle 3 in dieser Zelle 2 stehen, bzw. angleShift = 2 gesetzt werden.

Nun wird die Ziffer der nächst höherwertigen Zahlenrolle bestimmt, die in Fig. 5 mit b bezeichnet ist. Der Drehwinkel dieser Zahlenrolle ergibt 29 gemäss Tabelle 1 und ein korrigierter Drehwinkel 31 (bei einer Winkelverschiebung von 3) und aus Tabelle 2 folgt eine Ziffer 9. Der Wert der Winkelverschiebung für die nächst höherwertige Zahlenrolle wird aus Tabelle 3, Zeile 29, Spalte 2 entnommen, aus Fig. 5 ist aber ersichtlich, dass die nächst höherwertige Zahlenrolle c ebenso in Richtung Ziffer 9 verschoben werden soll, demzufolge muss in der Tabelle 3 in dieser Zelle 2 stehen, bzw. angleShift = 2 gesetzt werden.

Nun wird die Ziffer der nächst höherwertigen Zahlenrolle bestimmt, die in Fig. 5 mit c bezeichnet ist. Der Drehwinkel dieser Zahlenrolle ergibt 28 gemäss Tabelle 1 und ein korrigierter Drehwinkel 30 (bei einer Winkelverschiebung von 2) und aus Tabelle 2 folgt eine Ziffer 9. Der Wert der Winkelverschiebung für die nächst höherwertige Zahlenrolle wird aus Tabelle 3, Zeile 28, Spalte 2 entnommen, aus Fig. 5 ist aber ersichtlich, dass die nächst höherwertige Zahlenrolle d nicht verschoben werden soll, demzufolge muss in der Tabelle 3 in dieser Zelle 3 stehen, bzw. angleShift = 3 gesetzt werden.

Nun werden die Ziffern der beiden nächst höherwertigen Zahlenrollen, die in Fig. 5 mit d und e bezeichnet sind, bestimmt. Der Drehwinkel dieser Zahlenrollen ergibt 28 gemäss Tabelle 1 und ein korrigierter Drehwinkel 30 (bei einer Winkelverschiebung von 2) und aus Tabelle 2 folgt eine Ziffer 9. Der Wert der Winkelverschiebung für die nächst höherwertige Zahlenrolle f wird aus Tabelle 3, Zeile 28, Spalte 2 entnommen, aus Fig. 5 ist aber ersichtlich, dass die nächst höherwertige Zahlenrolle f nicht verschoben werden soll, demzufolge muss in der Tabelle 3 in dieser Zelle 3 stehen, bzw. angleShift = 3 gesetzt werden.

Die Bestimmung der Ziffern der zweithöchstwertigen Zahlenrolle g und der höchstwertigen Zahlenrolle h und die Bestimmung der Zelleninhalte der Tabelle 3 werden sinngemäss wie oben dargelegt vorgenommen.

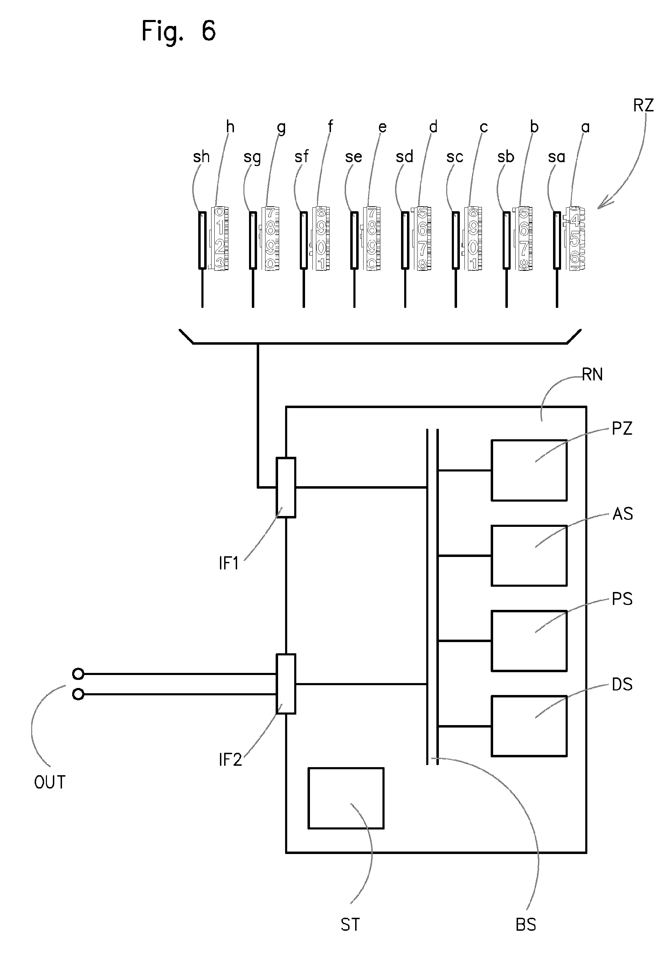

Fig. 6 zeigt ein Rollenzählwerk RZ in Verbindung mit einem Rechner RN. Das Rollenzählwerk RZ weist beispielsweise acht Zahlenrollen auf, wobei die niederwertigste Zahlenrolle mit a und dann in der Wertigkeit der Zahlenrollen aufsteigend mit b-g und die höchstwertige Zahlenrolle mit h bezeichnet sind. Jeder Zahlenrolle a-h ist eine Sensoreinrichtung sa-sh zugeordnet, die den Drehwinkel der Zahlenrolle erfasst und via einer ersten Schnittstelle IF1 an den Rechner RN weiterleitet.

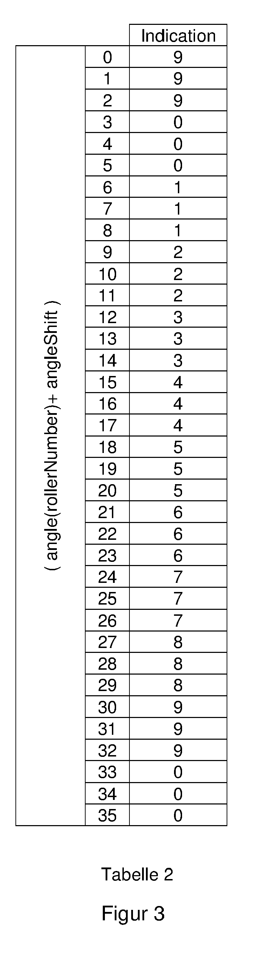

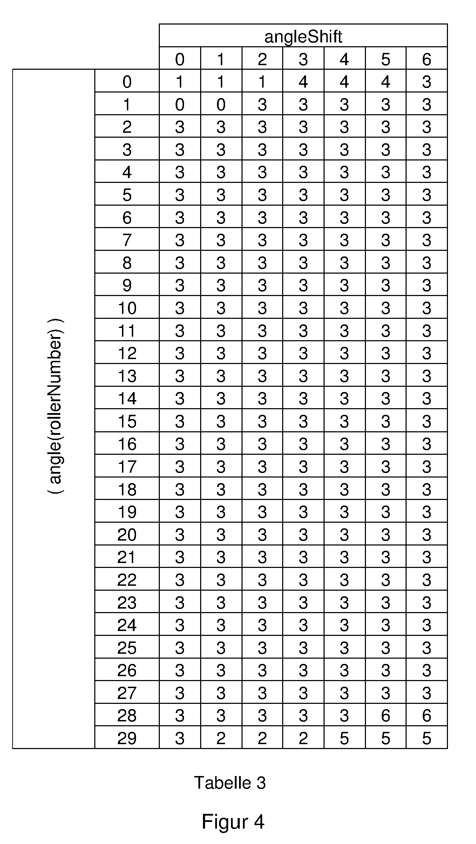

Der Rechner RN besteht im Wesentlichen aus einem Prozessor PZ, der in Verbindung steht mit einem Bussystem BS, an das auch ein Arbeitsspeicher AS, ein Programmspeicher PS und ein Datenspeicher DS angeschlossen sind. Der Arbeitsspeicher AS dient dem Prozessor PZ als Zwischenspeicher für komplexe Arbeitsschritte. Im Programmspeicher PS ist beispielsweise der Algorithmus der Fig. 2 in Codeform abgelegt, der bei der Ausführung mindestens teilweise in den Prozessor geladen wird. Im Datenspeicher DS sind beispielsweise die Tabellen der Fig. 3 und der Fig. 4 abgelegt und werden vom Prozessor PZ gemäss dem Algorithmus gelesen. Die bestimmten Ziffern stehen an einem Datenausgang OUT elektronisch zur Verfügung und können beispielsweise mittels einer Einrichtung zur Fernauslesung des Zählwerks RZ weiterverarbeitet werden. Die elektrische Speisung des Rechners RN erfolgt vorzugsweise über die Datenleitung OUT und eine Spannungsstabilisierung ST. Eine netzabhängige Speisung oder eine Batteriespeisung sind auch möglich.

## Patentansprüche

1. Verfahren zur Bestimmung der angezeigten Ziffern (0-9) von Zahlenrollen (a-h) eines mechanischen, mehrstelligen Rollenzählwerkes zur Anzeige und visuellen Ablesung einer Gasmenge oder einer Wassermenge oder einer Elektrizitätsmenge,
**dadurch gekennzeichnet,**
**dass** eine Ziffer (0-9) einer bestimmten Zahlenrolle (a-h) aus einer Tabelle gelesen wird, die eine Relation herstellt zwischen korrigierten Drehwinkeln der Zahlenrollen (a-h) und zugehörigen, angezeigten Ziffern der Zahlenrollen (a-h) und dass die korrigierten Drehwinkel bestimmt werden aus den erfassten Drehwinkeln, die je nach Ziffernwechsel mit einer Winkelverschiebung korrigiert werden, wobei die Winkelverschiebungen in Relation zu den erfassten Drehwinkeln aus einer weiteren Tabelle gelesen werden.

2. Verfahren nach Anspruch 1,
**dadurch gekennzeichnet,**
**dass** die Ziffer (0-9) der bestimmten Zahlenrolle (a-h) nach folgenden Schritten bestimmt wird:
S1)
Initialisieren einer der Winkelverschiebung zugeordneten Variablen (angleShift) und einer der bestimmten Zahlenrolle (a-h) zugeordneten Variable (rollerNumber).
S2)
Bestimmen einer der Ziffer (0-9) der bestimmten Zahlenrolle (a-h) zugeordneten Variable (Indication) aus der Tabelle in Abhängigkeit einer dem erfassten Drehwinkel zugeordneten Variablen (angle) und in Abhängigkeit der Variablen (angleShift).
S3)
Prüfen, ob die Variable (rollerNumber) die höchstwertige Zahlenrolle (h) beinhaltet.
S4)
Bestimmen der Variablen (angelShift) aus der weiteren Tabelle.
S5)
Setzen der Variablen (rollerNumber) auf die nächst höherwertige Zahlenrolle und
S6)
Wiederholen der Schritte S2)-S5) bis die Ziffer der Zahlenrolle mit der höchsten Wertigkeit (h) bestimmt ist.

3. Verfahren nach Anspruch 2,
**dadurch gekennzeichnet,**
**dass** nach der Durchführung der Schritte S2)-S6) der Drehwinkel der Zahlenrolle mit der zweitkleinsten Wertigkeit erneut erfasst wird und falls eine Änderung des Drehwinkels dieser Zahlenrolle aufgetreten ist werden die Schritte S2)-S6) wiederholt.

4. Rollenzählwerk mit Zahlenrollen (a-h) und Ziffern (0-9) zur Anzeige und visuellen Ablesung einer Gasmenge oder einer Wassermenge oder einer Elektrizitätsmenge,
**dadurch gekennzeichnet,**
**dass** ein in einem Rechner (RN) abgelegter und vom Rechner (RN) ausführbarer Algorithmus vorgesehen ist, der zur elektronischen Bestimmung einer Ziffer (0-9) einer bestimmten Zahlenrolle (a-h) eine im Rechner (RN) abgelegte Tabelle liest, die eine Relation herstellt zwischen korrigierten Drehwinkeln der Zahlenrollen (a-h) und zugehörigen, angezeigten Ziffern (0-9) der Zahlenrollen (a-h), wobei der Algorithmus korrigierte Drehwinkel bestimmt aus mittels einer Sensoreinrichtung (sa-sh) erfassten Drehwinkeln, die je nach Ziffernwechsel mit einer Winkelverschiebung korrigierbar sind, und wobei die Winkelverschiebungen in Relation zu den erfassten Drehwinkeln aus einer weiteren Tabelle des Rechners (RN) lesbar sind.
